(19) Europäisches Patentamt
European Patent Office
Office européen des brevets

(11) **EP 4 011 986 A1**

(12) **EUROPEAN PATENT APPLICATION**
published in accordance with Art. 153(4) EPC

(43) Date of publication:
**15.06.2022 Bulletin 2022/24**

(21) Application number: **20849836.0**

(22) Date of filing: **28.07.2020**

(51) International Patent Classification (IPC):
***C09D 11/023*** (2014.01)   ***C09D 11/033*** (2014.01)
***C09D 11/037*** (2014.01)

(52) Cooperative Patent Classification (CPC):
**C09D 11/023; C09D 11/033; C09D 11/037**

(86) International application number:
**PCT/JP2020/028790**

(87) International publication number:
**WO 2021/024843 (11.02.2021 Gazette 2021/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2019 JP 2019144434**

(71) Applicant: **Kao Corporation
Chuo-ku
Tokyo 103-8210 (JP)**

(72) Inventors:
• **MIZUSHIMA, Ryuma**
  **Wakayama-shi, Wakayama 640-8580 (JP)**
• **MATSUZONO, Takuto**
  **Wakayama-shi, Wakayama 640-8580 (JP)**
• **OZAKI, Yuki**
  **Wakayama-shi, Wakayama 640-8580 (JP)**
• **UEDA, Yasufumi**
  **Wakayama-shi, Wakayama 640-8580 (JP)**

(74) Representative: **Hoffmann Eitle
Patent- und Rechtsanwälte PartmbB
Arabellastraße 30
81925 München (DE)**

(54) **WATER-BASED GRAVURE-INK SET**

(57) The present invention relates to [1] an aqueous gravure ink set including an aqueous color ink and an aqueous medium, in which the aqueous color ink contains a color pigment, a polymer, a water-soluble organic solvent A, a surfactant and water; the aqueous medium contains an extender pigment, a polymer, a water-soluble organic solvent B having a boiling point of 100 to 260°C, a surfactant and water; a content of the extender pigment in the aqueous medium is not more than 25% by mass; and a content of the water-soluble organic solvent B in the aqueous medium is not more than 18% by mass, [2] an aqueous gravure ink, and [3] a process for producing the aqueous gravure ink including the step of compounding the aforementioned aqueous color ink and the aforementioned aqueous medium with each other. The aqueous gravure ink set and the aqueous gravure ink according to the present invention have a less burden on environments, and is excellent not only in transfer properties of ink to a printing substrate such as a resin film, etc., but also in anti-blocking properties of a printed material obtained after gravure printing upon storage of the printed material to thereby enable production of a high-definition printed material.

EP 4 011 986 A1

**Description**

FIELD OF THE INVENTION

The present invention relates to an aqueous gravure ink set, an aqueous gravure ink, and a process for producing the aqueous gravure ink.

BACKGROUND OF THE INVENTION

Gravure printing is a printing method in which an ink is transferred to a printing substrate using a gravure printing plate on which cells for receiving the ink are formed. The gravure printing is capable of well controlling a printing quality of the obtained printed material by suitably adjusting a depth of the cells and a distance between the cells (screen ruling: number of lines) and also capable of conducting high-definition printing, and therefore has been utilized in extensive applications.

In the gravure printing techniques in which an oil-based ink has been conventionally frequently used, from the viewpoint of improving working environments, global environments, disaster prevention, etc., there has been noticed gravure printing methods using an aqueous ink. However, the aqueous ink tends to exhibit poor drying properties or tends to be deteriorated in wettability to a surface of a gravure printing plate owing to a surface tension thereof. For this reason, the gravure printing methods using the aqueous ink tend to suffer from problems including not only low printing speed, but also poor transfer of the ink to the surface of the gravure printing plate, etc., even if being conducted similarly to those methods using the oil-based ink. Thus, the gravure printing methods using the aqueous ink tend to pose such a problem that a high-quality printed material can be hardly produced thereby.

In addition, in recent years, it has been demanded to suitably use a resin film such as a polyethylene terephthalate (PET) film, a polypropylene (PP) film, etc., as a printing substrate, and in association with such a demand, it has also been required to improve anti-blocking properties of the resulting printed material when subjected to take-up works or stacking works.

JP 2003-048280A (Patent Literature 1) discloses a print sheet including a sheet-like substrate and an outermost stain-resistant layer that is formed at least on a surface of the sheet-like substrate and contains a photocatalytic substance, in which images are printed on the surface of the sheet-like substrate, and an intermediate protective layer is formed between the printed surface of the sheet-like substrate and the outermost stain-resistant layer for protecting the sheet-like substrate and the images formed thereon, as a stain-resistant print sheet that is excellent in anti-discoloration/fading properties, etc., and can be applied to tents usable outdoors, etc. In Example 1 of the Patent Literature 1, there is described an example of the print sheet obtained by using a gravure ink that contains C.I. Pigment Green-36, C.I. Pigment White-4, a silica-containing matte medium and a diluent containing toluene and methyl ethyl ketone (at a weight ratio of 50/50).

SUMMARY OF THE INVENTION

The present invention relates to an aqueous gravure ink set including an aqueous color ink and an aqueous medium, in which:

the aqueous color ink contains a color pigment, a polymer A, a water-soluble organic solvent A, a surfactant and water, and the aqueous medium contains an extender pigment, a polymer B, a water-soluble organic solvent B having a boiling point of not lower than 100°C and not higher than 260°C, a surfactant and water;
a content of the extender pigment in the aqueous medium is not more than 25% by mass; and
a content of the water-soluble organic solvent B in the aqueous medium is not more than 18% by mass.

DETAILED DESCRIPTION OF THE INVENTION

The gravure ink used for the stain-resistant print sheet described in the Patent Literature 1 is an oil-based ink, and therefore has posed the problem concerning a burden on environments.

On the other hand, an aqueous ink containing water as a main component has a high surface tension. Therefore, the aqueous ink is compounded with a water-soluble organic solvent and a surfactant in addition to a pigment and a polymer in order to improve wettability thereof to a printing substrate. In such formulation of the aqueous ink, good wettability of the ink against the printing substrate is assured by a well-balanced compounding ratio between the pigment, the polymer, the water-soluble organic solvent, the surfactant and water. However, the conventional aqueous inks have failed to exhibit fully satisfactory transfer properties and anti-blocking properties.

The present invention relates to an aqueous gravure ink set that has a less burden on environments, and is excellent not only in transfer properties of ink to a printing substrate such as a resin film, etc., but also in anti-blocking properties (stacking storage durability) of a printed material obtained after gravure printing upon storage of the printed material when being subjected to take-up works or stacking works, etc., to thereby enable production of a high-definition printed material; an aqueous gravure ink; and a process for producing the aqueous gravure ink.

The present inventors have found that the aforementioned conventional problems can be solved by an aqueous gravure ink set and an aqueous gravure ink respectively including an aqueous color ink containing a color pigment, a polymer, a water-soluble organic solvent, a surfactant and water, and an aqueous medium, in which a specific amount of an extender pigment as well as a specific amount of a water-soluble organic solvent having a specific boiling point are compounded in the aqueous medium.

That is, the present invention relates to the following aspects [1] to [3].

[1] An aqueous gravure ink set including an aqueous color ink and an aqueous medium, in which:

the aqueous color ink contains a color pigment, a polymer A, a water-soluble organic solvent A, a surfactant and water, and the aqueous medium contains an extender pigment, a polymer B, a water-soluble organic solvent B having a boiling point of not lower than 100°C and not higher than 260°C, a surfactant and water; a content of the extender pigment in the aqueous medium is not more than 25% by mass; and a content of the water-soluble organic solvent B in the aqueous medium is not more than 18% by mass.

[2] An aqueous gravure ink containing an aqueous color ink and an aqueous medium which are compounded with each other, in which:

the aqueous color ink contains a color pigment, a polymer A, a water-soluble organic solvent A, a surfactant and water, and the aqueous medium contains an extender pigment, a polymer B, a water-soluble organic solvent B having a boiling point of not lower than 100°C and not higher than 260°C, a surfactant and water; a content of the extender pigment in the aqueous medium is not more than 25% by mass; and a content of the water-soluble organic solvent B in the aqueous medium is not more than 18% by mass.

[3] A process for producing an aqueous gravure ink including the step of compounding an aqueous color ink and an aqueous medium with each other, in which:

the aqueous color ink contains a color pigment, a polymer A, a water-soluble organic solvent A, a surfactant and water, and the aqueous medium contains an extender pigment, a polymer B, a water-soluble organic solvent B having a boiling point of not lower than 100°C and not higher than 260°C, a surfactant and water; a content of the extender pigment in the aqueous medium is not more than 25% by mass; a content of the water-soluble organic solvent B in the aqueous medium is not more than 18% by mass; and the aqueous medium is compounded in an amount of not less than 5 parts by mass and not more than 400 parts by mass on the basis of 100 parts by mass of the aqueous color ink.

In accordance with the present invention, it is possible to provide an aqueous gravure ink set that has a less burden on environments, and is excellent in not only transfer properties of ink to a printing substrate such as a resin film, etc., but also anti-blocking properties of a printed material obtained after gravure printing upon storage of the printed material to thereby enable production of a high-definition printed material; an aqueous gravure ink; and a process for producing the aqueous gravure ink.

[Aqueous Gravure Ink Set]

The aqueous gravure ink set of the present invention (hereinafter also referred to merely as an "ink set of the present invention") includes an aqueous color ink and an aqueous medium, in which:

the aqueous color ink contains a color pigment, a polymer A, a water-soluble organic solvent A, a surfactant and water, and the aqueous medium contains an extender pigment, a polymer B, a water-soluble organic solvent B having a boiling point of not lower than 100°C and not higher than 260°C, a surfactant and water; a content of the extender pigment in the aqueous medium is not more than 25% by mass; and a content of the water-soluble organic solvent B in the aqueous medium is not more than 18% by mass.

When compounding the aqueous color ink and the aqueous medium which both are contained in the ink set of the present invention, with each other, it is possible to obtain the aqueous gravure ink of the present invention (hereinafter also referred to merely as a "gravure ink of the present invention"). The gravure ink of the present invention which is obtained from the ink set of the present invention, when conducting gravure printing by supplying the gravure ink to a gravure printing apparatus, has a less burden on environments, and is excellent in not only transfer properties of ink to a printing substrate such as a resin film, etc., but also anti-blocking properties of the resulting printed material upon storage thereof to thereby enable production of a high-definition printed material.

The reason why the aforementioned high-definition gravure printed material can be obtained by the present invention as described above is considered as follows, though it is not clearly determined yet.

The aqueous gravure ink set of the present invention includes an aqueous color ink containing a color pigment and an aqueous medium containing an extender pigment, in which both of the aqueous color ink and the aqueous medium respectively contain a polymer, a water-soluble organic solvent and a surfactant, and the aqueous medium is capable of satisfying (i) the requirement that the aqueous medium contains a water-soluble organic solvent B having a boiling point of not lower than 100°C and not higher than 260°C, (ii) the requirement that a content of the water-soluble organic solvent B in the aqueous medium is not more than 18% by mass, and (iii) the requirement that a content of the extender pigment in the aqueous medium is not more than 25% by mass. As a result, it is considered that since the gravure ink of the present invention which is obtained by compounding the aqueous color ink and the aqueous medium with each other is hardly dried in cells of a gravure printing plate, it is possible to maintain a high transfer rate of the ink. In addition, it is considered that since the thus obtained gravure ink of the present invention contains the extender pigment derived from the aqueous medium, the contact area between printed portions upon storage of the resulting printed material can be reduced, so that the printed material can be improved in anti-blocking properties to thereby maintain a high-definition printed condition, and the gravure ink of the present invention can have a less burden on environments.

[Aqueous Color ink]

<Color pigment>

The aqueous color ink contained in the ink set of the present invention contains a color pigment.

The color pigment may be either an inorganic pigment or an organic pigment.

Examples of the inorganic pigment include carbon blacks, metal oxides and the like. The carbon blacks are preferably used for black inks. Examples of the carbon blacks include furnace blacks, thermal lamp blacks, acetylene blacks, channel blacks and the like. As a pigment for white inks, there may be used metal oxides such as titanium dioxide, zinc oxide, etc., and the like. These inorganic pigments may be subjected to surface treatments with conventionally known hydrophobilizing agents such as a titanium coupling agent, a higher fatty acid metal salt, etc.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments and the like.

The hue of these pigments is not particularly limited. In chromatic inks, there may be used any suitable chromatic pigments such as a yellow pigment, a magenta pigment, a cyan pigment, a red pigment, a blue pigment, an orange pigment, a green pigment, etc.

The color pigment used herein is preferably in the form of at least one pigment selected from the group consisting of a self-dispersible pigment, and pigment particles formed by dispersing a pigment with a polymer (hereinafter also referred to merely as "pigment-containing polymer particles A"), and more preferably in the form of the pigment-containing polymer particles A.

The pigment-containing polymer particles A also include the below-mentioned pigment-containing crosslinked polymer particles.

Incidentally, the self-dispersible pigment as used herein means a pigment onto a surface of which at least one hydrophilic group selected from the group consisting of an anionic hydrophilic group and a cationic hydrophilic group is bonded either directly or through the other atom group to thereby render the pigment dispersible in a water-based medium without using a surfactant or a polymer.

<Polymer A>

The polymer A used in the aqueous color ink included in the ink set of the present invention may be in the form of either a water-insoluble polymer or a water-soluble polymer. Of these polymers, preferred is the water-insoluble polymer.

The water-insoluble polymer as used herein means such a polymer that when the polymer is dried to a constant weight at 105°C for 2 hours and then dissolved in 100 g of water at 25°C until reaching a saturation concentration thereof, the solubility in water of the polymer is less than 10 g. The solubility in water of the water-insoluble polymer is preferably not more than 5 g and more preferably not more than 1 g. Whereas, the water-soluble polymer as used herein means

4

such a polymer that when dissolving the polymer in water under the same conditions as described above, the solubility in water of the polymer is not less than 10 g. In the case where the polymer is in the form of an anionic polymer, the aforementioned solubility means a solubility of the polymer whose anionic groups are neutralized completely (i.e., 100%) with sodium hydroxide.

Examples of the polymer A used herein include polyesters, polyurethanes, vinyl-based polymers and the like. As the polymer A, from the viewpoint of improving dispersion stability of the pigment in the resulting ink, preferred are vinyl-based polymers obtained by subjecting a vinyl monomer such as a vinyl compound, a vinylidene compound, a vinylene compound, etc., to addition polymerization. In addition, as the polymer A, there may also be used a crosslinked polymer obtained by crosslinking the aforementioned polymer with a crosslinking agent.

The aforementioned polymer A is preferably used in the form of pigment-containing polymer particles A by dispersing the polymer particles in the aqueous color ink. Furthermore, the polymer A is also preferably used in the form of pigment-free polymer particles A' in combination with the polymer particles A by dispersing the polymer particles in the aqueous color ink. In the following, the polymer constituting the pigment-containing polymer particles A is also referred to merely as a "polymer a", whereas the polymer constituting the pigment-free polymer particles A' is also referred to merely as a "polymer a' ".

From the viewpoint of improving transfer properties of the gravure ink of the present invention, the polymer a may be used as a pigment dispersing polymer having a capability of dispersing the pigment in the ink, whereas the polymer a' may be used as a fixing aid polymer for fixing the ink on a printing substrate.

The polymer a may have a composition that is different from that of the polymer a'. In addition, the polymers a and a' may be identical to each other inclusive of their composition, but may be different from each other merely as to inclusion or non-inclusion of the pigment therein.

In the case where the aqueous color ink contains both of the pigment-containing polymer particles A and the polymer particles A', the content of the polymer in the aqueous color ink means a total content of the polymer a and the polymer a' therein.

The content of the polymer (a total content of the polymer a and the polymer a') in the aqueous color ink is preferably not less than 2% by mass, more preferably not less than 4% by mass and even more preferably not less than 6% by mass, and is also preferably not more than 20% by mass, more preferably not more than 18% by mass and even more preferably not more than 15% by mass, from the viewpoint of improving dispersibility of the pigment in the resulting ink and fixing properties of the ink.

[Polymer a]

The polymer a is preferably in the form of a vinyl-based polymer. The vinyl-based polymer preferably contains a constitutional unit derived from (a1) an ionic monomer and a constitutional unit derived from (a2) a hydrophobic monomer.

The ionic monomer (a1) is preferably in the form of an anionic monomer. Examples of the ionic monomer (a1) include carboxylic acid monomers, sulfonic acid monomers and the like. Among these monomers, preferred are carboxylic acid monomers, more preferred is at least one monomer selected from the group consisting of acrylic acid and methacrylic acid.

Examples of the hydrophobic monomer (a2) include alkyl (meth)acrylates, aromatic group-containing monomers, macromonomers containing a polymerizable functional group at one terminal end thereof, and the like.

The alkyl (meth)acrylates are preferably those alkyl (meth)acrylates containing an alkyl group having not less than 6 and not more than 18 carbon atoms. Examples of the alkyl (meth)acrylates include methyl (meth)acrylate, ethyl (meth)acrylate, (iso)propyl (meth)acrylate, (*iso*- or *tert*-)butyl (meth)acrylate, cyclohexyl (meth)acrylate, 2-ethylhexyl (meth)acrylate, (iso)octyl (meth)acrylate and the like.

As the aromatic group-containing monomers, preferred are vinyl-based monomers containing an aromatic group having not less than 6 and not more than 22 carbon atoms, and more preferred are styrene-based monomers, aromatic group-containing (meth)acrylates and the like. Examples of the preferred styrene-based monomers include styrene, 2-methyl styrene, $\alpha$-methyl styrene, vinyl toluene, divinyl benzene and the like. Examples of the preferred aromatic group-containing (meth)acrylates include benzyl (meth)acrylate and the like.

The polymer a may also contain a constitutional unit derived from (a3) a nonionic monomer in place of the constitutional unit derived from the hydrophobic monomer (a2), or may further contain the constitutional unit derived from the nonionic monomer (a3) in addition to the constitutional unit derived from the ionic monomer (a1) and the constitutional unit derived from the hydrophobic monomer (a2).

The nonionic monomer (a3) is in the form of a monomer having high affinity to water or a water-soluble organic solvent. As the nonionic monomer (a3), preferred are a polyalkylene glycol (meth)acrylate and an alkoxy polyalkylene glycol (meth)acrylate, and more preferred is methoxy polyethylene glycol (n = 1 to 30) (meth)acrylate. Specific examples of commercially available products of the nonionic monomer include "NK ESTER M" series products available from Shin-Nakamura Chemical Co., Ltd.; "BLEMMER PE" series products, "BLEMMER PME" series products, "BLEMMER 50PEP" series products, "BLEMMER 50POEP" series products, etc., all available from NOF Corporation; and the like.

(Contents of Respective Constitutional Units in Polymer a)

The contents of the respective constitutional units derived from the components (a1) to (a3) in the polymer a are as follows from the viewpoint of improving dispersion stability of the resulting ink.

The content of the component (a1) is preferably not less than 5% by mass, more preferably not less than 10% by mass and even more preferably not less than 15% by mass, and is also preferably not more than 40% by mass, more preferably not more than 38% by mass and even more preferably not more than 35% by mass.

The content of the component (a2) is preferably not less than 20% by mass, more preferably not less than 40% by mass and even more preferably not less than 60% by mass, and is also preferably not more than 95% by mass, more preferably not more than 90% by mass and even more preferably not more than 85% by mass.

The content of the component (a3) is preferably not more than 15% by mass, more preferably not more than 10% by mass and even more preferably not more than 5% by mass.

(Production of Polymer a)

The aforementioned polymer a may be produced by copolymerizing a monomer mixture containing the ionic monomer (a1) and the hydrophobic monomer (a2), and/or the nonionic monomer (a3), etc., by a conventionally known solution polymerization method, etc.

The weight-average molecular weight of the polymer a is preferably not less than 3,000, more preferably not less than 5,000 and even more preferably not less than 10,000, and is also preferably not more than 100,000, more preferably not more than 50,000 and even more preferably not more than 30,000, from the viewpoint of improving dispersion stability of the color pigment and fixing properties of the gravure ink of the present invention to a printing substrate.

The acid value of the polymer a is preferably not less than 100 mgKOH/g, more preferably not less than 150 mgKOH/g and even more preferably not less than 200 mgKOH/g, and is also preferably not more than 350 mgKOH/g, more preferably not more than 300 mgKOH/g and even more preferably not more than 250 mgKOH/g, from the viewpoint of improving dispersibility of the color pigment and adsorptivity of the polymer.

Meanwhile, the weight-average molecular weight and the acid value may be measured by the respective methods described in Examples below.

(Production of Pigment-Containing Polymer Particles A)

The pigment-containing polymer particles A are particles that are formed by allowing the polymer a which may or may not have a crosslinked structure to absorb onto a surface of the color pigment, and can be stably dispersed in the ink.

The pigment-containing polymer particles A may be efficiently produced in the form of a water dispersion thereof by a process including the following step I or II, and is also preferably produced by the process further including the following step III.

Step I: subjecting a mixture containing the polymer a and the color pigment, if required together with a neutralizing agent, a surfactant, etc., to dispersion treatment to thereby obtain a water dispersion of the pigment-containing polymer particles A;

Step II: in the case where the mixture used in the step I contains an organic solvent, removing the organic solvent from the resulting dispersion to thereby obtain the water dispersion of the pigment-containing polymer particles A; and

Step III: mixing the water dispersion of the pigment-containing polymer particles A obtained in the step I or the step II with a crosslinking agent to subject the water dispersion to crosslinking treatment, thereby obtaining a water dispersion of the pigment-containing polymer particles having a crosslinked structure.

In the case where the polymer a is an anionic polymer, anionic groups contained in the polymer may be neutralized using a neutralizing agent. When using the neutralizing agent, the anionic groups contained in the polymer are preferably neutralized such that the pH value of the obtained dispersion falls within the range of not less than 7 and not more than 11. Examples of the neutralizing agent include bases such as lithium hydroxide, sodium hydroxide, potassium hydroxide, ammonia, various amines and the like. In addition, the polymer may be previously neutralized.

The neutralization degree of the anionic groups contained in the polymer a is preferably not less than 10 mol% and not more than 100 mol%, more preferably not less than 20 mol% and not more than 90 mol% and even more preferably not less than 30 mol% and not more than 80 mol%, on the basis of the anionic groups, from the viewpoint of improving dispersion stability of the resulting ink.

**EP 4 011 986 A1**

The aforementioned neutralization degree of the polymer a as used herein may be determined as an equivalent amount of the neutralizing agent on the basis of the anionic groups contained in the polymer a according to the following formula. When the equivalent amount of the neutralizing agent used is not more than 100 mol%, the equivalent amount of the neutralizing agent used has the same meaning as the neutralization degree of the anionic groups to be neutralized. On the other hand, when the equivalent amount of the neutralizing agent used exceeds 100 mol%, it means that the neutralizing agent is present in an excessively large amount relative to the acid groups contained in the polymer a, and in such a case, the neutralization degree of the polymer a is regarded as being 100 mol%.

Equivalent amount (mol%) of neutralizing agent used = [{mass (g) of neutralizing agent added/equivalent amount of neutralizing agent}/[{weighted mean acid value (mgKOH/g) of polymer a x mass (g) of polymer a}/(56 x 1000)]] x 100.

The dispersion treatment to be conducted in the step I is not particularly limited. For example, the dispersion treatment may be conducted by the method of applying a mechanical force to the mixture as described in the paragraph [0032] of JP 2018-83938A. The apparatus used for applying a mechanical force to the mixture is preferably a media-type disperser from the viewpoint of efficiently reducing a particle size of the pigment.

When conducting the dispersion treatment, by well controlling a pressure used in the dispersion treatment, etc., it is possible to adjust the particle size of the pigment to a desired value.

The step II is the step that may be conducted in the case where the mixture used in the step I contains an organic solvent, i.e., the step of removing the organic solvent from the resulting dispersion to obtain a water dispersion of the pigment-containing polymer particles A.

The method of removing the organic solvent is not particularly limited, and may be conducted by any suitable conventionally known methods. The organic solvent is preferably substantially completely removed from the resulting water dispersion. However, the residual organic solvent may be present in an amount of preferably not more than 0.1% by mass in the water dispersion unless the objects and advantageous effects of the present invention are adversely affected by inclusion of the residual organic solvent.

In the step III, the water dispersion of the pigment-containing polymer particles A obtained in the step I or the step II is mixed with a crosslinking agent, so that carboxy groups of the polymer a constituting the pigment-containing polymer particles A are partially crosslinked to form a crosslinked structure on a part or whole of a surface layer portion of the respective polymer particles A, thereby forming the pigment-containing polymer particles having a crosslinked structure.

In the case where the polymer a is in the form of an anionic polymer containing anionic groups, the crosslinking agent is preferably a compound containing a functional group that is capable of reacting with the anionic groups, and more preferably a compound containing not less than 2 and not more than 6 functional groups that are capable of reacting with the anionic groups in a molecule thereof.

Examples of the suitable crosslinking agent include a compound containing two or more epoxy groups in a molecule thereof, a compound containing two or more oxazoline groups in a molecule thereof, and a compound containing two or more isocyanate groups in a molecule thereof. Among these compounds, preferred is a compound containing two or more epoxy groups in a molecule thereof, and more preferred is trimethylolpropane polyglycidyl ether.

The crosslinking rate of acid components contained in the polymer a is preferably not less than 5 mol%, more preferably not less than 10 mol% and even more preferably not less than 20 mol%, and is also preferably not more than 80 mol%, more preferably not more than 70 mol% and even more preferably not more than 60 mol%, from the viewpoint of improving storage stability of the resulting ink.

The content of the polymer a in the aqueous color ink is preferably not less than 0.1% by mass, more preferably not less than 0.2% by mass and even more preferably not less than 0.3% by mass, and is also preferably not more than 10% by mass, more preferably not more than 8% by mass and even more preferably not more than 5% by mass, from the viewpoint of improving stability of the aqueous color ink.

The mass ratio of the polymer a to the color pigment [polymer a/color pigment] in the aqueous color ink is preferably not less than 0.02, more preferably not less than 0.05 and even more preferably not less than 0.1, and is also preferably not more than 2.3, more preferably not more than 1.5 and even more preferably not more than 1, from the same viewpoint as described above.

Specific examples of commercially available products of the vinyl-based polymers include polyacrylic acids such as "ARON AC-10SL" available from Toagosei Co., Ltd., etc., styrene-acrylic resins such as "JONCRYL 67", "JONCRYL 611", "JONCRYL 678", "JONCRYL 680", "JONCRYL 690" and "JONCRYL 819" all available from BASF Japan, Ltd., etc., and the like.

The average particle size of the pigment-containing polymer particles A in the aqueous color ink or the water dispersion as a precursor of the ink is preferably not less than 80 nm, more preferably not less than 100 nm and even more preferably not less than 120 nm, and is also preferably not more than 300 nm, more preferably not more than 250 nm and even more preferably not more than 200 nm, from the viewpoint of improving stability of the resulting ink.

Meanwhile, the average particle size of the pigment-containing polymer particles A may be measured by the method described in Examples below.

(Pigment-Free Polymer Particles A')

The aqueous color ink preferably contains pigment-free polymer particles A' (polymer particles A') from the viewpoint of improving fixing properties of the gravure ink of the present invention to a printing substrate by allowing the ink to form a film thereof on the printing substrate. The polymer particles A' contain no pigment and are in the form of water-insoluble polymer particles formed of a polymer solely.

Examples of a polymer a' constituting the polymer particles A' include polyesters, polyurethanes, vinyl-based polymers and the like. Among these polymers, preferred are the vinyl-based polymers, and also preferred is a combination of the vinyl-based polymers with various polymers.

The polymer particles A' are preferably used in the form of a water dispersion prepared by dispersing the polymer particles in water. The polymer particles A' used herein may be either an appropriately synthesized product or a commercially available product.

[Polymer a']

The aforementioned vinyl-based polymer is preferably a water-insoluble vinyl-based polymer that is produced by copolymerizing a monomer mixture A' containing (a'1) an ionic monomer and (a'2) a hydrophobic monomer.

Examples of the component (a'1) include the same monomers as described above as to the aforementioned component (a1). Among these monomers, from the viewpoint of improving dispersion stability of the resulting ink, preferred are anionic monomers, more preferred are carboxylic acid monomers, and even more preferred is at least one monomer selected from the group consisting of acrylic acid and methacrylic acid.

Examples of the component (a'2) include the same alkyl (meth)acrylates, aromatic group-containing monomers and macromonomers as described above as to the aforementioned component (a2), etc. Among these monomers, preferred are alkyl (meth)acrylates; more preferred are those alkyl (meth)acrylates containing an alkyl group having not less than 1 and not more than 22 carbon atoms and preferably not less than 1 and not more than 10 carbon atoms; even more preferred are those compounds illustrated above; and further even more preferred is a combination of methyl (meth)acrylate and 2-ethylhexyl (meth)acrylate.

(Contents of Respective Constitutional Units in Polymer a')

The contents of the respective constitutional units derived from the components (a'1) and (a'2) in the polymer a' are as follows from the viewpoint of improving fixing properties of the ink onto a printing substrate.

The content of the component (a'1) is preferably not less than 1% by mass, more preferably not less than 3% by mass and even more preferably not less than 5% by mass, and is also preferably not more than 30% by mass, more preferably not more than 20% by mass and even more preferably not more than 15% by mass.

The content of the component (a'2) is preferably not less than 50% by mass, more preferably not less than 60% by mass and even more preferably not less than 70% by mass, and is also preferably not more than 99% by mass, more preferably not more than 97% by mass and even more preferably not more than 95% by mass.

The aforementioned polymer a' may be produced by copolymerizing a monomer mixture containing the ionic monomer (a'1), the hydrophobic monomer (a'2) and the like by a conventionally known solution polymerization method, etc.

Examples of commercially available products of the dispersion of the polymer particles A' include dispersions of acrylic resins such as "Neocryl A1127" (anionic self-crosslinkable water-based acrylic resin) available from DSM NeoResins, Inc., "JONCRYL 390" available from BASF Japan, Ltd., etc.; urethane-based resins such as "WBR-2018" and "WBR-2000U" both available from Taisei Fine Chemical Co., Ltd., etc.; styrene-butadiene resins such as "SR-100" and "SR-102" both available from Nippon A & L Inc., etc.; styrene-acrylic resins such as "JONCRYL 7100", "JONCRYL 7600", "JONCRYL 734", "JONCRYL 780", "JONCRYL 537J", "JONCRYL 538J", "JONCRYL PDX-7164" and "JONCRYL PDX-7775" all available from BASF Japan, Ltd., etc.; vinyl chloride-acrylic resins such as "VINYBLAN 700" and "VINYBLAN 701" both available from Nissin Chemical Co., Ltd., etc.; polyolefin wax emulsions such as "AQUACER 497", "AQUACER 507" and "AQUACER 526" (high-density polyethylene wax emulsions) all available from BYK-Chemie GmbH; and the like.

The weight-average molecular weight of the polymer a' is preferably not less than 5,000, more preferably not less than 8,000 and even more preferably not less than 10,000, and is also preferably not more than 1,000,000, more preferably not more than 100,000 and even more preferably not more than 50,000, from the viewpoint of improving fixing properties of the resulting ink to a printing substrate.

The acid value of the polymer a' is preferably not less than 1 mgKOH/g, more preferably not less than 3 mgKOH/g and even more preferably not less than 5 mgKOH/g, and is also preferably not more than 70 mgKOH/g, more preferably not more than 65 mgKOH/g and even more preferably not more than 60 mgKOH/g, from the viewpoint of improving stability of the aqueous color ink.

Meanwhile, the weight-average molecular weight and the acid value of the polymer a' may be measured by the respective methods described in Examples below.

In addition, the average particle size of the polymer particles A' in the aqueous color ink or the water dispersion as a precursor of the ink is preferably not less than 10 nm, more preferably not less than 20 nm and even more preferably not less than 30 nm, and is also preferably not more than 300 nm, more preferably not more than 200 nm, even more preferably not more than 150 nm and further even more preferably not more than 130 nm, from the viewpoint of improving stability of the aqueous color ink.

Meanwhile, the average particle size of the polymer particles A' may be measured by the method described in Examples below.

<Water-Soluble Organic Solvent A>

The water-soluble organic solvent A used in the aqueous color ink included in the ink set of the present invention may be present either in a liquid state or in a solid state as measured at an ordinary temperature (25°C). The water-soluble organic solvent as used herein means an organic solvent having a solubility in water of not less than 10 mL as measured by dissolving the organic solvent in 100 mL of water at 25°C.

The boiling point of the water-soluble organic solvent A is preferably not lower than 100°C, more preferably not lower than 120°C and even more preferably not lower than 130°C, and is also preferably not higher than 260°C, more preferably not higher than 240°C and even more preferably not higher than 230°C, from the viewpoint of improving transfer properties and anti-blocking properties of the gravure ink of the present invention. The boiling point as used herein means a normal boiling point (boiling point as measured at 1 atm), and in the case where two or more water-soluble organic solvents are used as the aforementioned water-soluble organic solvent A, the boiling point of the water-soluble organic solvent A is a weighted mean value of boiling points of the two or more water-soluble organic solvents which are weighted by contents (% by mass) of the respective water-soluble organic solvents.

The water-soluble organic solvent A preferably contains a glycol ether having a boiling point of not lower than 100°C and not higher than 260°C from the viewpoint of improving transfer properties and anti-blocking properties of the gravure ink of the present invention.

The molecular weight of the aforementioned glycol ether is preferably not less than 70, more preferably not less than 80 and even more preferably not less than 100, and is also preferably not more than 200, more preferably not more than 190 and even more preferably not more than 180.

The boiling point of the aforementioned glycol ether is preferably not lower than 110°C, more preferably not lower than 120°C and even more preferably not lower than 130°C, and is also preferably not higher than 250°C, more preferably not higher than 240°C and even more preferably not higher than 235°C, from the same viewpoint as described above.

From the viewpoint of improving transfer properties and anti-blocking properties of the gravure ink of the present invention, the content of the aforementioned glycol ether in the aqueous color ink is preferably not less than 1% by mass, more preferably not less than 2% by mass and even more preferably not less than 4% by mass, and is also preferably not more than 12% by mass, more preferably not more than 10% by mass and even more preferably not more than 8% by mass.

The mass ratio of the aforementioned glycol ether to a whole amount of the water-soluble organic solvent A [glycol ether/whole amount of water-soluble organic solvent A] in the aqueous color ink is preferably not less than 0.5, more preferably not less than 0.6 and even more preferably not less than 0.7, and is also preferably not more than 1.

Specific examples of the aforementioned glycol ether include ethylene glycol monomethyl ether, ethylene glycol monoisopropyl ether, ethylene glycol monobutyl ether, diethylene glycol monomethyl ether, diethylene glycol monoisopropyl ether, diethylene glycol monobutyl ether, diethylene glycol monoisobutyl ether, dipropylene glycol monomethyl ether, tripropylene glycol monomethyl ether, diethylene glycol dimethyl ether, diethylene glycol methyl ethyl ether, diethylene glycol diethyl ether, and the like.

Of these glycol ethers, preferred is at least one compound selected from the group consisting of ethylene glycol monomethyl ether (125°C), ethylene glycol monoisopropyl ether (142°C), diethylene glycol monomethyl ether (194°C), diethylene glycol monoisopropyl ether (207°C), diethylene glycol monobutyl ether (230°C) and diethylene glycol monoisobutyl ether (boiling point: 220°C), and more preferred is at least one compound selected from the group consisting of ethylene glycol monomethyl ether (MG; boiling point: 125°C), diethylene glycol monobutyl ether (BDG; boiling point: 230°C) and diethylene glycol monoisobutyl ether (iBDG; boiling point: 220°C).

Incidentally, the numerical values in the respective parentheses indicate boiling points of the aforementioned water-based organic solvents.

The water-soluble organic solvent A may further contain the other water-soluble organic solvent(s) than the aforementioned glycol ether. Examples of the other water-soluble organic solvent(s) include alcohols, divalent or higher-valent polyhydric alcohols such as propylene glycol, etc., pyrrolidones such as *N*-methyl-2-pyrrolidone, 2-pyrrolidone, etc., alkanol amines, and the like.

The aqueous color ink may also contain a water-soluble organic solvent A having a boiling point lower than 100°C or higher than 260°C. Examples of the water-soluble organic solvent having a boiling point lower than 100°C include monohydric alcohols such as ethanol, 2-propanol (isopropyl alcohol), 1-propanol (*n*-propyl alcohol), etc. Examples of the water-soluble organic solvent having a boiling point higher than 260°C include triethylene glycol (boiling point: 285°C), tripropylene glycol (boiling point: 273°C), glycerin (boiling point: 290°C), and the like.

The content of the water-soluble organic solvent A having a boiling point lower than 100°C in the aqueous color ink is preferably less than 5% by mass, more preferably less than 3% by mass and even more preferably less than 1% by mass from the viewpoint of suppressing drying of the gravure ink of the present invention and reducing a burden on environments.

The content of the water-soluble organic solvent A having a boiling point higher than 260°C in the aqueous color ink is preferably less than 5% by mass, more preferably less than 3% by mass and even more preferably less than 1% by mass from the viewpoint of improving transfer properties and anti-blocking properties of the gravure ink of the present invention.

<Surfactant>

The surfactant as used in the aqueous color ink included in the ink set of the present invention is a compound whose static surface tension as measured in a 1% by mass water mixed solution of the compound at 20°C is not more than 45 mN/m.

The static surface tension of the surfactant used in the aqueous color ink as measured in a 1% by mass water mixed solution thereof at 20°C is preferably not more than 40 mN/m, more preferably not more than 35 mN/m and even more preferably not more than 32 mN/m, and is also preferably not less than 15 mN/m, more preferably not less than 18 mN/m and even more preferably not less than 20 mN/m, from the viewpoint of improving transfer properties and anti-blocking properties of the gravure ink of the present invention.

The aqueous color ink may contain two or more surfactants. As the surfactant, from the viewpoint of improving wettability of the gravure ink of the present invention to a printing substrate, preferred is a nonionic surfactant, more preferred is at least one surfactant selected from the group consisting of an acetylene glycol-based surfactant and a silicone-based surfactant, and even more preferred is a combination of an acetylene glycol-based surfactant and a silicone-based surfactant.

As the acetylene glycol-based surfactant, from the viewpoint of improving transfer properties and anti-blocking properties of the gravure ink of the present invention, preferred are an acetylene glycol having not less than 8 and not more than 22 carbon atoms and an ethylene adduct of the acetylene glycol, and more preferred is the acetylene glycol having not less than 8 and not more than 22 carbon atoms. The number of carbon atoms contained in the aforementioned acetylene glycol is preferably not less than 10 and more preferably not less than 12, and is also preferably not more than 20, more preferably not more than 18 and even more preferably not more than 16.

Specific examples of the acetylene glycol-based surfactant include at least one acetylene glycol selected from the group consisting of 2,4,7,9-tetramethyl-5-decyne-4,7-diol, 3,6-dimethyl-4-octyne-3,6-diol and 2,5-dimethyl-3-hexyne-2,5-diol, and ethyleneoxide adducts of these acetylene glycols. Of these compounds, preferred is 2,4,7,9-tetramethyl-5-decyne-4,7-diol.

The HLB value of the acetylene glycol-based surfactant is preferably not less than 0, more preferably not less than 1, even more preferably not less than 2 and further even more preferably not less than 2.5, and is also preferably not more than 5, more preferably not more than 4.5, even more preferably not more than 4 and further even more preferably not more than 3.5. The "HLB" value as used herein may be determined by a Griffin method.

Specific examples of commercially available products of the acetylene glycol-based surfactant include "SURFYNOL 104" (2,4,7,9-tetramethyl-5-decyne-4,7-diol; average molar number of addition of EO: 0; HLB: 3.0), "SURFYNOL 104E" (a 50% ethylene glycol-diluted solution of "SURFYNOL 104"), "SURFYNOL 104PG-50" (a 50% propylene glycol-diluted solution of "SURFYNOL 104") and "SURFYNOL 420" (an EO adduct of "SURFYNOL 104"; average molar number of addition of EO: 1.3; HLB: 4.7) all available from Air Products & Chemicals, Inc., "ACETYLENOL E13T" (average molar number of addition of EO: 1.3; HLB: 4.7) available from Kawaken Fine Chemicals Co., Ltd., and the like.

Examples of the silicone-based surfactant include dimethyl polysiloxane, polyether-modified silicones, amino-modified silicones, carboxy-modified silicones and methylphenyl polysiloxane, as well as modified silicones such as fatty acid-modified silicones, alcohol-modified silicones, aliphatic alcohol-modified silicones, epoxy-modified silicones, fluorine-modified silicones, etc., and the like. Of these silicone-based surfactants, polyether-modified silicones are preferred from the viewpoint of improving wettability of the ink to a printing substrate.

Specific examples of the polyether-modified silicones include PEG-3 dimethicone, PEG-9 dimethicone, PEG-9 PEG-9 dimethicone, PEG-9 methyl ether dimethicone, PEG-10 dimethicone, PEG-11 methyl ether dimethicone, PEG/PPG-20/22 butyl ether dimethicone, PEG-32 methyl ether dimethicone, PEG-9 polydimethylsiloxyethyl dimethicone, lauryl PEG-9 polydimethylsiloxyethyl dimethicone and the like. Of these polyether-modified silicones, preferred is PEG-11 methyl ether dimethicone.

Specific examples of commercially available products of the silicone-based surfactant include "KF-6011", "KF-6012", "KF-6013", KF-6015", "KF-6016", "KF-6017", "KF-6028", "KF-6038" and "KF-6043" all as silicones available from Shin-Etsu Chemical Co., Ltd., "TEGO WET 240" and "TEGO WET 270" both available from Evonik Japan Co., Ltd., and the like.

The surfactant may also contain the other surfactant(s) than the aforementioned surfactants. Examples of the preferred other surfactant(s) include at least one surfactant selected from the group consisting of an anionic surfactant, a nonionic surfactant other than the aforementioned surfactants and an ampholytic surfactant. These other surfactants may be used in combination of any two or more thereof.

Of these other surfactants, preferred is the nonionic surfactant such as an alcohol-based surfactant, etc.

(Contents of Respective Components in Aqueous Color Ink)

The contents of the color pigment, the polymer A, the water-soluble organic solvent A, the surfactant and the like in the aqueous color ink included in the ink set of the present invention are as follows from the viewpoint of improving transfer properties and anti-blocking properties of the gravure ink of the present invention.

The content of the color pigment in the aqueous color ink is preferably not less than 2% by mass, more preferably not less than 5% by mass and even more preferably not less than 8% by mass, and is also preferably not more than 30% by mass, more preferably not more than 20% by mass and even more preferably not more than 15% by mass.

The content of the pigment-containing polymer particles in the aqueous color ink is preferably not less than 2% by mass, more preferably not less than 5% by mass and even more preferably not less than 8% by mass, and is also preferably not more than 35% by mass, more preferably not more than 25% by mass and even more preferably not more than 20% by mass.

The content of the polymer a constituting the pigment-containing polymer particles A in the aqueous color ink is preferably not less than 1% by mass, more preferably not less than 2% by mass and even more preferably not less than 3% by mass, and is also preferably not more than 20% by mass, more preferably not more than 10% by mass and even more preferably not more than 7% by mass.

The content of the polymer particles A' in the aqueous color ink is preferably not less than 1% by mass, more preferably not less than 3% by mass and even more preferably not less than 5% by mass, and is also preferably not more than 30% by mass, more preferably not more than 20% by mass, even more preferably not more than 15% by mass and further even more preferably not more than 10% by mass, from the viewpoint of improving fixing properties of the gravure ink of the present invention.

The mass ratio of the polymer (a whole amount of the polymer a and the polymer a') to the pigment (polymer/pigment) in the aqueous color ink is preferably not less than 0.2, more preferably not less than 0.3 and even more preferably not less than 0.5, and is also preferably not more than 3, more preferably not more than 2 and even more preferably not more than 1.5, from the viewpoint of improving stability of the gravure ink of the present invention.

The content (whole amount) of the water-soluble organic solvent A in the aqueous color ink is preferably not less than 1% by mass, more preferably not less than 2% by mass and even more preferably not less than 5% by mass, and is also preferably not more than 25% by mass, more preferably not more than 20% by mass and even more preferably not more than 15% by mass.

The content of the surfactant in the aqueous color ink is preferably not less than 0.1% by mass, more preferably not less than 0.2% by mass, even more preferably not less than 0.5% by mass and further even more preferably not less than 0.8% by mass, and is also preferably not more than 5% by mass, more preferably not more than 4% by mass and even more preferably not more than 3.5% by mass, from the viewpoint of improving wettability of the gravure ink of the present invention to a printing substrate.

The content of the acetylene glycol-based surfactant in the aqueous color ink is preferably not less than 0.3% by mass, more preferably not less than 0.5% by mass and even more preferably not less than 0.7% by mass, and is also preferably not more than 5% by mass, more preferably not more than 4% by mass and even more preferably not more than 3.5% by mass, from the viewpoint of improving wettability of the gravure ink of the present invention to a printing substrate.

The mass ratio of the acetylene glycol-based surfactant to a sum of the acetylene glycol-based surfactant and the silicone-based surfactant [acetylene glycol-based surfactant/sum of both surfactants] in the aqueous color ink is preferably not less than 0.1, more preferably not less than 0.2 and even more preferably not less than 0.3, and is also preferably not more than 1, more preferably not more than 0.9 and even more preferably not more than 0.8.

<Water>

The content of water in the aqueous color ink is preferably not less than 45% by mass, more preferably not less than 50% by mass and even more preferably not less than 55% by mass, and is also preferably not more than 75% by mass, more preferably not more than 70% by mass and even more preferably not more than 65% by mass, from the viewpoint of improving transfer properties and anti-blocking properties of the gravure ink of the present invention while suppressing generation of volatile organic compounds from the ink. In the case where the ink contains an optional component(s) other than the color pigment, the polymer A, the water-soluble organic solvent A, the surfactant and water, the optional component(s) may be incorporated into the ink by replacing a part of the content of water therewith.

The aqueous color ink included in the ink set of the present invention may also contain various additives as optional components, such as a viscosity controller, a pH modifier, a defoaming agent, an antiseptic agent, a rust preventive, etc., according to use or applications of the ink.

The Zahn cup viscosity (efflux time (sec)) of the aqueous color ink as measured at 20°C is preferably not less than 10 seconds, more preferably not less than 12 seconds and even more preferably not less than 13 seconds, and is also preferably not more than 25 seconds, more preferably not more than 20 seconds and even more preferably not more than 18 seconds, from the viewpoint of improving transfer properties and anti-blocking properties of the gravure ink of the present invention. The Zahn cup viscosity may be measured by the method described in Examples below. Incidentally, the aforementioned viscosity represents a viscosity of the ink when used for gravure printing.

The pH value of the aqueous color ink as measured at 20°C is preferably not less than 5.5, more preferably not less than 6.0 and even more preferably not less than 6.5 from the viewpoint of improving dispersion stability of the resulting ink, and is also preferably not more than 11.0, more preferably not more than 10.5 and even more preferably not more than 10.0 from the viewpoint of improving the resistance of members to the ink and suppressing skin irritation. The pH value may be measured by the method described in Examples below.

[Aqueous Medium]

The aqueous medium included in the ink set of the present invention contains an extender pigment, a polymer B, a water-soluble organic solvent B having a boiling point of not lower than 100°C and not higher than 260°C, a surfactant and water from the viewpoint of improving transfer properties and anti-blocking properties of the gravure ink of the present invention. The aqueous medium is used for diluting the aqueous color ink included in the ink set of the present invention, and is mixed with the aqueous color ink to prepare a aqueous gravure ink serving for the printing.

<Extender Pigment>

The extender pigment used in the aqueous medium is an achromatic pigment generally used as a mixing agent. Examples of the extender pigment include calcium carbonate, barium sulfate, aluminum hydroxide, silica, talc and the like. Of these extender pigments, preferred is at least one pigment selected from the group consisting of calcium carbonate, barium sulfate and silica.

The content of the extender pigment in the aqueous medium is preferably not less than 0.1% by mass, more preferably not less than 0.5% by mass, even more preferably not less than 1% by mass, further even more preferably not less than 9% by mass and still further even more preferably not less than 15% by mass, and is also preferably not more than 25% by mass, more preferably not more than 22% by mass and even more preferably not more than 20% by mass.

The mass ratio of the content of the extender pigment in the aqueous medium to the content of the color pigment in the aqueous color ink [extender pigment/color pigment] is preferably not less than 0.01, more preferably not less than 0.05, even more preferably not less than 0.08, further even more preferably not less than 0.1 and still further even more preferably not less than 0.8, and is also preferably not more than 3, more preferably not more than 2.5, even more preferably not more than 2.2, further even more preferably not more than 1.5 and still further even more preferably not more than 1.2.

<Polymer B>

The polymer B used in the aqueous medium may be identical to or different from the polymer A used in the aqueous color ink. However, the polymer B is preferably identical to the polymer A, since in such a case, it becomes possible to ensure both of good transfer properties and anti-blocking properties of the gravure ink of the present invention, and good storage stability of the aqueous medium and the aqueous color ink.

The polymer B used in the aqueous medium preferably has the same constitution as that of the polymer a' constituting the polymer particles A' used in the aqueous color ink.

The content of the polymer B in the aqueous medium is preferably not less than 2% by mass, more preferably not less than 5% by mass and even more preferably not less than 8% by mass, and is also preferably not more than 35% by mass, more preferably not more than 25% by mass and even more preferably not more than 20% by mass, from the viewpoint of improving transfer properties and anti-blocking properties of the gravure ink of the present invention.

The mass ratio of the content of the polymer B in the aqueous medium to the content of the polymer A in the aqueous color ink [polymer B in aqueous medium/polymer A in aqueous color ink] is preferably not less than 0.3, more preferably not less than 0.4 and even more preferably not less than 0.5, and is also preferably not more than 4, more preferably not more than 3 and even more preferably not more than 2.

<Water-Soluble Organic Solvent B>

The water-soluble organic solvent B used in the aqueous medium has a boiling point of not lower than 100°C and not higher than 260°C from the viewpoint of improving transfer properties and anti-blocking properties of the gravure ink of the present invention. The water-soluble organic solvent B is preferably identical to a water-soluble organic solvent having a boiling point of not lower than 100°C and not higher than 260°C among those water-soluble solvents A in the aqueous color ink.

That is, the boiling point of the water-soluble organic solvent B is preferably not lower than 110°C, more preferably not lower than 120°C and even more preferably not lower than 130°C, and is also preferably not higher than 250°C, more preferably not higher than 240°C and even more preferably not higher than 235°C.

Examples of the suitable water-soluble organic solvent B include at least one compound selected from the group consisting of ethylene glycol monomethyl ether, ethylene glycol monoisopropyl ether, diethylene glycol monomethyl ether, diethylene glycol monoisopropyl ether, diethylene glycol monobutyl ether and diethylene glycol monoisobutyl ether. Of these water-soluble organic solvents, more preferred is at least one compound selected from the group consisting of ethylene glycol monomethyl ether (MG), diethylene glycol monobutyl ether (BDG) and diethylene glycol monoisobutyl ether (iBDG).

The content (whole amount) of the water-soluble organic solvent B in the aqueous medium is not more than 18% by mass, preferably not more than 16% by mass and more preferably not more than 10% by mass, and is also preferably not less than 0.2% by mass, more preferably not less than 0.5% by mass and even more preferably not less than 0.8% by mass.

In addition, the mass ratio of the content of the water-soluble organic solvent B in the aqueous medium to the content of the water-soluble organic solvent A in the aqueous color ink [water-soluble organic solvent B in aqueous medium/water-soluble organic solvent A in aqueous color ink] is preferably not less than 0.08, more preferably not less than 0.1 and even more preferably not less than 0.5, and is also preferably not more than 3, more preferably not more than 2.5 and even more preferably not more than 2.2.

<Surfactant>

As the surfactant used in the aqueous medium, from the viewpoint of improving wettability of the gravure ink of the present invention to a printing substrate, preferred is a nonionic surfactant, more preferred is at least one surfactant selected from the group consisting of an acetylene glycol-based surfactant and a silicone-based surfactant, and even more preferred is a combination of an acetylene glycol-based surfactant and a silicone-based surfactant.

In addition, the surfactant used in the aqueous medium may be identical to or different from the surfactant used in the aqueous color ink. However, the surfactant used in the aqueous medium is preferably identical to the surfactant used in the aqueous color ink, since in such a case, it becomes possible to ensure both of good transfer properties and anti-blocking properties of the gravure ink of the present invention, and good storage stability of the aqueous medium and the aqueous color ink.

The content of the surfactant in the aqueous medium is preferably not less than 0.1% by mass, more preferably not less than 0.5% by mass and even more preferably not less than 0.8% by mass, and is also preferably not more than 5% by mass, more preferably not more than 4% by mass and even more preferably not more than 3% by mass, from the viewpoint of improving wettability of the gravure ink of the present invention to a printing substrate.

In addition, the mass ratio of the content of the surfactant in the aqueous medium to the content of the surfactant in the aqueous color ink [surfactant in aqueous medium/surfactant in aqueous color ink] which are included in the ink set of the present invention is preferably not less than 0.5, more preferably not less than 0.7 and even more preferably not less than 0.9, and is also preferably not more than 2.5, more preferably not more than 2 and even more preferably not more than 1.5.

The mass ratio of the surfactant to the polymer B in the aqueous medium [surfactant in aqueous medium/polymer B in aqueous medium] is preferably not less than 0.1, more preferably not less than 0.12 and even more preferably not less than 0.14, and is also preferably not more than 0.3, more preferably not more than 0.28 and even more preferably not more than 0.26, from the viewpoint of improving transfer properties and anti-blocking properties of the gravure ink of the present invention.

The content of water in the aqueous medium is preferably not less than 50% by mass, more preferably not less than 52% by mass and even more preferably not less than 55% by mass, and is also preferably not more than 75% by mass, more preferably not more than 70% by mass and even more preferably not more than 67% by mass, from the viewpoint of improving transfer properties and anti-blocking properties of the gravure ink of the present invention.

The difference between a Zahn cup viscosity (efflux time (sec)) of the aqueous medium as measured at 20°C and a Zahn cup viscosity (efflux time (sec)) of the aqueous color ink as measured at 20°C is preferably not more than 2 seconds, more preferably not more than 1 second and even more preferably less than 1 second when used for the gravure printing, from the viewpoint of improving transfer properties and anti-blocking properties of the gravure ink of the present invention.

The Zahn cup viscosity may be measured by the method described in Examples below.

The aqueous medium included in the ink set of the present invention may also contain various additives as optional components, such as a pH modifier, a defoaming agent, an antiseptic agent, a rust preventive, etc., according to use or applications of the ink.

[Aqueous Gravure Ink]

The aqueous gravure ink of the present invention contains the aqueous color ink and the aqueous medium which are compounded with each other, in which:

the aqueous color ink contains the color pigment, the polymer A, the water-soluble organic solvent A, the surfactant and water, and the aqueous medium contains the extender pigment, the polymer B, the water-soluble organic solvent B having a boiling point of not lower than 100°C and not higher than 260°C, the surfactant and water;
a content of the extender pigment in the aqueous medium is not more than 25% by mass; and
a content of the water-soluble organic solvent B in the aqueous medium is not more than 18% by mass.

The details of the aqueous color ink and the aqueous medium contained in the aqueous gravure ink of the present invention as well as the color pigment, the extender pigment, the polymer A, the polymer B, the water-soluble organic solvent A, the water-soluble organic solvent B having a boiling point of not lower than 100°C and not higher than 260°C, the surfactants and water which are contained in the aqueous color ink and the aqueous medium, are the same as those described in the aforementioned column "[Water Gravure Ink Set]".

[Process for Producing Aqueous Gravure Ink]

The process for producing an aqueous gravure ink according to the present invention includes the step of compounding the aqueous color ink and the aqueous medium with each other, in which 100 parts by mass of the aqueous color ink are compounded with not less than 5 parts by mass and not more than 400 parts by mass of the aqueous medium. The method of compounding the aqueous color ink and the aqueous medium with each other is not particularly limited, and may be conducted by ordinary methods.

In this case, the aforementioned aqueous color ink contains the color pigment, the polymer A, the water-soluble organic solvent A, the surfactant and water, and the aforementioned aqueous medium contains the extender pigment, the polymer B, the water-soluble organic solvent B having a boiling point of not lower than 100°C and not higher than 260°C, the surfactant and water;

a content of the extender pigment in the aqueous medium is not more than 25% by mass; and
a content of the water-soluble organic solvent B in the aqueous medium is not more than 18% by mass.

The aqueous gravure ink obtained by the process of the present invention (the gravure ink of the present invention) is used as the ink set of the present invention for gravure printing.

The amount of the aqueous medium compounded is preferably not less than 8 parts by mass, more preferably not less than 10 parts by mass and even more preferably not less than 15 parts by mass, and is also preferably not more than 300 parts by mass, more preferably not more than 200 parts by mass and even more preferably not more than 100 parts by mass, on the basis of 100 parts by mass of the aqueous color ink, from the viewpoint of improving transfer properties and anti-blocking properties of the gravure ink of the present invention.

(Contents of Respective Components in Gravure Ink of the Present Invention Used for Printing)

The contents of the color pigment, the extender pigment, the polymers, the water-soluble organic solvents and the surfactants in the aqueous gravure ink of the present invention (the gravure ink of the present invention) are as follows from the viewpoint of improving transfer properties and anti-blocking properties of the gravure ink of the present invention.

The content of the color pigment in the gravure ink of the present invention is preferably not less than 0.4% by mass, more preferably not less than 1% by mass, even more preferably not less than 5% by mass and further even more preferably not less than 7% by mass, and is also preferably not more than 32% by mass, more preferably not more than 25% by mass, even more preferably not more than 20% by mass and further even more preferably not more than 15% by mass.

The content of the extender pigment in the gravure ink of the present invention is preferably not less than 0.1% by mass, more preferably not less than 1% by mass and even more preferably not less than 3% by mass, and is also preferably not more than 20% by mass, more preferably not more than 15% by mass, even more preferably not more than 10% by mass, further even more preferably not more than 5% by mass and still further even more preferably not more than 3% by mass.

The content of the polymers (total content of the polymer A and the polymer B) in the gravure ink of the present invention is preferably not less than 1.5% by mass, more preferably not less than 3% by mass and even more preferably not less than 5% by mass, and is also preferably not more than 48% by mass, more preferably not more than 20% by mass and even more preferably not more than 15% by mass, from the viewpoint of improving fixing properties of the gravure ink of the present invention.

The content of the water-soluble organic solvents (total content of the water-soluble organic solvent A and the water-soluble organic solvent B) in the gravure ink of the present invention is preferably not more than 20% by mass, more preferably not more than 15% by mass and even more preferably not more than 13% by mass, and is also preferably not less than 1% by mass, more preferably not less than 2% by mass and more preferably not less than 3% by mass.

The content of the surfactants in the gravure ink of the present invention is preferably not less than 0.1% by mass, more preferably not less than 0.2% by mass, even more preferably not less than 0.5% by mass and further even more preferably not less than 0.8% by mass, and is also preferably not more than 5% by mass, more preferably not more than 4% by mass and even more preferably not more than 3.5% by mass, from the viewpoint of improving wettability of the gravure ink of the present invention to a printing substrate.

The content of the acetylene glycol-based surfactant in the gravure ink of the present invention is preferably not less than 0.3% by mass, more preferably not less than 0.5% by mass and even more preferably not less than 0.7% by mass, and is also preferably not more than 5% by mass, more preferably not more than 4% by mass and even more preferably not more than 3.5% by mass, from the viewpoint of improving wettability of the gravure ink of the present invention to a printing substrate.

The mass ratio of the acetylene glycol-based surfactant to a sum of the acetylene glycol-based surfactant and the silicone-based surfactant (acetylene glycol-based surfactant/sum of surfactants) in the gravure ink of the present invention is preferably not less than 0.1, more preferably not less than 0.2 and even more preferably not less than 0.3, and is also preferably not more than 1, more preferably not more than 0.9 and even more preferably not more than 0.8.

<Water>

The content of water in the gravure ink of the present invention is preferably not less than 45% by mass, more preferably not less than 50% by mass and even more preferably not less than 55% by mass, and is also preferably not more than 75% by mass, more preferably not more than 70% by mass and even more preferably not more than 65% by mass, from the viewpoint of improving transfer properties and anti-blocking properties of the gravure ink of the present invention while suppressing generation of volatile organic compounds from the ink.

In the case where the ink contains an optional component(s) other than the pigments, the polymers, the water-soluble organic solvents, the surfactants and water, the optional component(s) may be incorporated into the ink by replacing a part of the content of water therewith.

The gravure ink of the present invention may also contain various additives as optional components, such as a viscosity controller, a pH modifier, a defoaming agent, an antiseptic agent, a rust preventive, etc., in addition to the aqueous color ink and the aqueous medium, according to use or applications of the ink.

The Zahn cup viscosity (efflux time (sec)) of the gravure ink of the present invention as measured at 20°C is preferably not less than 10 seconds, more preferably not less than 12 seconds and even more preferably not less than 13 seconds, and is also preferably not more than 25 seconds, more preferably not more than 20 seconds and even more preferably not more than 18 seconds, from the viewpoint of improving transfer properties and anti-blocking properties of the gravure ink of the present invention. The Zahn cup viscosity may be measured by the method described in Examples below. Incidentally, the aforementioned viscosity represents a viscosity of the ink when used for gravure printing.

The pH value of the gravure ink of the present invention as measured at 20°C is preferably not less than 5.5, more preferably not less than 6.0 and even more preferably not less than 6.5 from the viewpoint of improving dispersion stability of the resulting ink, and is also preferably not more than 11.0, more preferably not more than 10.5 and even more preferably not more than 10.0 from the viewpoint of improving the resistance of members to the ink and suppressing skin irritation.

The pH value may be measured by the method described in Examples below.

[Gravure Printing Method]

The ink set of the present invention and the gravure ink of the present invention can be suitably used in gravure printing using a gravure printing plate. When using the ink set of the present invention and the gravure ink of the present invention to print characters or images on a printing substrate by a gravure printing method, it is possible to obtain a high-definition gravure printed material owing to excellent transfer properties of the ink and excellent anti-blocking properties of the printed material obtained after the gravure printing.

The gravure printing is such a printing method as mentioned in detail hereinunder. That is, while rotating a gravure cylinder (a gravure printing plate) on a surface of which recessed cells are formed, the aforementioned ink is supplied over the surface of the gravure cylinder, and scraped off therefrom by a doctor blade fixedly mounted at a predetermined position to allow the ink to remain only within the cells. Then, a printing substrate continuously fed to the gravure cylinder is pressure-contacted to the surface of the gravure cylinder by means of an impression cylinder whose surface is formed of a rubber to thereby transfer only the ink in the cells of the gravure cylinder to the printing substrate and thereby print characters or images on the printing substrate.

It is not necessary to dilute the gravure ink of the present invention with a solvent when being subjected to the gravure printing. The upper limit of the whole amount of the water-soluble organic solvents contained in the ink is preferably controlled to not more than 20% by mass and more preferably not more than 15% by mass, and therefore the gravure ink of the present invention is capable of reducing a burden on environments.

(Printing Substrate)

Examples of the printing substrate used in the gravure printing include papers such as a coated paper, an art paper, a synthetic paper, a processed paper, etc.; resin films such as a polyester film, a polyethylene film, a polypropylene film, a polystyrene film, a polyvinyl chloride film, a nylon film, etc.; and the like.

As the printing substrate, preferred is the resin film. In addition, from the viewpoint of improving applicability of the resulting printed material to after-processing treatments such as punching treatment, etc., preferred are a polyester film and a polypropylene film. These resin films may be in the form of either a biaxially oriented film, a monoaxially oriented film or a non-oriented film.

In addition, from the viewpoint of improving gravure printability, there may also be used such a resin film that is subjected to electrical discharge surface treatments such as corona discharge treatment, plasma discharge treatment, etc.

EXAMPLES

In the following Examples, etc., the respective properties were measured by the following methods. Incidentally, the "part(s)" and "%" indicate "part(s) by mass" and "% by mass", respectively, unless otherwise specified.

(1) Measurement of Weight-Average Molecular Weight of Polymer

The weight-average molecular weight of the polymer was measured by gel chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in *N,N*-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the resin with 10 mL of the aforementioned eluent in a glass vial, stirring the resulting mixture with a magnetic stirrer at 25°C for 10 hours, and then subjecting the mixture to filtration treatment through a syringe filter "DISMIC-13HP" (PTFE; 0.2 $\mu$m) available from Advantec Co., Ltd.

(2) Measurement of Acid Value of Polymer

In an automatic potentiometric titrator (power burette; "Model No.: APB-610") available from Kyoto Electronics Manufacturing Co., Ltd., the resin was dissolved in a titrant solvent prepared by mixing toluene and acetone (2 + 1), and the resulting solution was subjected to titration with a 0.1N potassium hydroxide/ethanol solution by a potentiometric titration method until reaching an end point of the titration observed as an inflection point of the titration curve. The acid value of the polymer was calculated from an amount (titer) of the potassium hydroxide solution used in the titration until reaching the end point.

(3) Measurement of Solid Contents of Water Dispersion of Pigment-Containing Polymer Particles, Water Dispersion Liquids of Calcium Carbonate and Barium Sulfate, and Emulsion of Pigment-Free Polymer Particles A'

Using an infrared moisture meter "FD-230" available from Kett Electric Laboratory, 5 g of a sample to be measured was dried at a drying temperature of 150°C under a measuring mode 96 (monitoring time: 2.5 minutes/variation range: 0.05%), and then a water content (%) of the sample to be measured was measured to calculate a solid content thereof according to the following formula.

$$\text{Solid Content (\%) = 100 - Water Content (\%) of Sample to be Measured}$$

(4) Measurement of Average Particle Sizes of Pigment-Containing Polymer Particles A and Pigment-Free Polymer Particles A'

The cumulant analysis of the particles was conducted using a laser particle analyzing system "ELS-8000" available from Otsuka Electrics Co., Ltd., to measure an average particle size thereof. In the measurement, there was used a dispersion liquid prepared by diluting the dispersion with water such that a concentration of the particles to be measured in the resulting dispersion liquid was adjusted to about $5 \times 10^{-3}$% by weight. The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as an average particle size of the pigment-containing polymer particles A or the pigment-free polymer particles A'.

(5) Measurement of Zahn Cup Viscosities of Aqueous Color Ink, Aqueous Medium and Gravure Ink of the Present Invention

The Zahn cup viscosities (efflux time (sec)) of the respective inks or medium were measured at 20°C using a Zahn cup viscometer (No. 3) available from RIGO Co., Ltd.

(6) Measurement of pH of Gravure Ink of the Present Invention

The pH value of the ink was measured at 20°C using a bench-top pH meter "F-71" available from Horiba Ltd., equipped with a pH electrode "6337-10D" available from Horiba Ltd.

Production Example A (Production of Water Dispersion of Pigment-Containing Polymer Particles A1)

Two hundred and thirty six parts of ion-exchanged water were weighed and placed in a 2 L-capacity flask, and then 60 parts of a water-insoluble styrene-acrylic polymer "JONCRYL 690" (tradename; weight-average molecular weight: 16500; acid value: 240 mgKOH/g) available from BASF Japan, Ltd., and 36.5 parts of a 5N sodium hydroxide solution (sodium neutralization degree: 60 mol%) were added to the flask. The contents of the flask were stirred for 2 hours using an anchor blade at 200 rpm, thereby obtaining 332.5 parts of a styrene-acrylic polymer aqueous solution (solid content: 19.9%).

A 2 L-capacity vessel equipped with a disper blade was charged with 331.7 parts of the aforementioned aqueous solution and 448.3 parts of ion-exchanged water, and the contents of the vessel were stirred using a disper "ULTRA DISPER" (tradename) available from Asada Iron Works Co., Ltd., at 1400 rpm for 15 minutes while cooling in a water bath at 0°C.

Next, 220 parts of a magenta pigment "Fast Carmine 550" available from Fuji Pigment Co., Ltd., were added to the vessel, and the contents the vessel were stirred at 6400 rpm for 1 hour. The resulting dispersion liquid was charged into a wet disperser "Ultra Apex Mill UAM05" (tradename) available from HIROSHIMA METAL & MACHINERY Co., Ltd., packed with 0.3 mm$\phi$ zirconia beads "XTZ Ball" (tradename) available from Nikkato Corporation at a packing rate of 80% by volume, and subjected to dispersion treatment by passing the dispersion liquid through the disperser 5 times at a peripheral speed of 8 m/s and a flow rate of 200 g/min while cooling the dispersion liquid with chilled water at 5°C, followed by subjecting the resulting dispersion to filtration treatment through a 200-mesh wire screen.

Added to 500 parts of the above-obtained filtrate (pigment: 110 parts; polymer: 33 parts) were 7.3 parts of "DENACOL EX-321L" (trimethylolpropane polyglycidyl ether; epoxy equivalent: 129) available from Nagase ChemteX Corporation (corresponding to 40 mol% on the basis of a carboxylic acid acting as a crosslinking reaction site contained in an acrylic acid moiety in the polymer) and 1 part of "Ploxel LV(S)" (mildew-proof agent; active ingredient content: 20%) available from LONZA Japan K.K., and 17.9 parts of ion-exchanged water were further added thereto such that a solid content of the resulting dispersion was 28.6%. The obtained dispersion was stirred at 70°C for 3 hours, and then subjected to filtration treatment through a 200-mesh wire screen, thereby obtaining 526.2 parts of a water dispersion of pigment-containing polymer particles A1 (content of pigment-containing polymer particles: 28.6%; average particle size: 164 nm).

Production Example B (Production of Water Dispersion Liquid B of Calcium Carbonate)

A 1 L plastic container was charged with 554 parts of 0.8 mm$\phi$ zirconia beads "XTZ Ball" (tradename) available from Nikkato Corporation at a beads packing rate of 30% by volume, and 5 parts of a dispersant "POIZ 520" (tradename; special polycarboxylate polymer dispersant; active ingredient content: 40%) available from Kao Corporation, 250 parts of calcium carbonate "Brilliant-1500" (tradename) as an extender pigment available from Shiraishi Kogyo Kaisha, Ltd., and 165 parts of ion-exchanged water were added to the container. Then, the contents of the container were subjected to dispersion treatment using a paint shaker "PS-1943" (tradename) available from Asada Iron Works Co., Ltd., for 1 hour. Thereafter, the obtained dispersion was allowed to pass through a 200-mesh wire screen to remove the zirconia beads therefrom, thereby obtaining 420 parts of a water dispersion liquid B of calcium carbonate having an active ingredient content of 60% and an average particle size of 150 nm.

Production Example C (Production of Water Dispersion Liquid C of Barium Sulfate)

A 1 L plastic container was charged with 554 parts of 0.8 mm$\phi$ zirconia beads "XTZ Ball" (tradename) available from Nikkato Corporation at a beads packing rate of 30% by volume, and 5 parts of a dispersant "POIZ 520" (tradename; special polycarboxylate polymer dispersant; active ingredient content: 40%) available from Kao Corporation, 250 parts of barium sulfate "BARIACE B-30" (tradename) as an extender pigment available from Sakai Chemical Industry Co., Ltd., and 165 parts of ion-exchanged water were added to the container. Then, the contents of the container were subjected to dispersion treatment using a paint shaker "PS-1943" (tradename) available from Asada Iron Works Co., Ltd., for 1 hour. Thereafter, the obtained dispersion was allowed to pass through a 200-mesh wire screen to remove the zirconia beads therefrom, thereby obtaining 420 parts of a water dispersion liquid C of barium sulfate having an active ingredient content of 60% and an average particle size of 200 nm.

Preparation Example A1 (Preparation of Aqueous Color Ink A1)

In a production vessel, 45.0 parts of the water dispersion of the pigment-containing polymer particles A1 obtained in Production Example A (content of pigment in color ink: 9.5 parts; content of pigment-containing polymer particles A1 in ink: 12.9 parts) were mixed with 0.6 part of a neutralizing agent (a 5 N NaOH solution) and 17.8 parts of an acrylic polymer emulsion "JONCRYL PDX-7775" (tradename; content of polymer in ink: 8.0 parts; solid content: 45%; average particle size: 80 nm) as pigment-free polymer particles A' available from BASF Japan, Ltd., followed by stirring the contents of the production vessel at 150 rpm.

Moreover, 7.0 parts of diethylene glycol monoisobutyl ether (iBDG; boiling point: 220°C) available from FUJIFILM Wako Pure Chemical Corporation, 2.0 parts of an acetylene glycol-based surfactant "SURFYNOL 104PG-50" (tradename; SF104PG-50 in Table 1; 2,4,7,9-tetramethyl-5-decyne-4,7-diol (HLB: 3.0); a 50% propylene glycol-diluted solution of "SURFYNOL 104") available from Air Products & Chemicals, Inc., 0.5 part of a polyether-modified polysiloxane-based surfactant "TEGO WET 240" (tradename; TEGO 240 in Table 1) available from Evonik Japan Co., Ltd., 0.4 part of a viscosity controller "ADEKANOL UH-420" (tradename; UH-420 in Table 1; nonionic polymer surfactant; aqueous solution having an active ingredient content of 30%) available from ADEKA Corporation, and 25.8 parts of ion-exchanged water were added to the production vessel, followed by stirring the contents of the production vessel at room temperature for 30 minutes. Then, the resulting dispersion was subjected to filtration treatment through a stainless steel wire screen (200 mesh), thereby obtaining an aqueous color ink A1.

Incidentally, a total amount of the respective components compounded was 100 parts.

The Zahn-cup viscosity of the aqueous color ink A1 as measured at 20°C was 14 seconds, and the pH value thereof as measured at 20°C was 7.6.

Preparation Examples B1 to B9 and Comparative Preparation Examples B11 to B15 (Preparation of Aqueous Medium B1 to B9 and B11 to B15)

The same procedure as in Preparation Example A1 was repeated except that the water dispersion of the pigment-containing polymer particles A1 and the neutralizing agent were not used, and the water dispersion liquid B of calcium carbonate produced in Production Example B, the water dispersion liquid C of barium sulfate produced in Production Example C or a colloidal silica was used as the extender pigment with the compositional ratios and amounts shown in Table 1, thereby preparing aqueous medium B1 to B9 and B11 to B15. The results are shown in Table 1.

Incidentally, the Zahn-cup viscosity of each of the aqueous medium B1 to B9 constituting the respective ink sets as measured at 20°C was 14 seconds.

TABLE 1

| | | | Preparations Examples | | | | | | | | | Comparative Preparations Examples | | | | |
|---|---|---|---|---|---|---|---|---|---|---|---|---|---|---|---|---|
| | | | B1 | B2 | B3 | B4 | B5 | B6 | B7 | B8 | B9 | B11 | B12 | B13 | B14 | B15 |
| Kind of aqueous medium | | | B1 | B2 | B3 | B4 | B5 | B6 | B7 | B8 | B9 | B11 | B12 | B13 | B14 | B15 |
| Composition of aqueous medium | Extender pigment | Calcium carbonate | 1.0 | 9.5 | 20.0 | 9.5 | 9.5 | 9.5 | 9.5 | | | 9.5 | 9.5 | 9.5 | 30.0 | |
| | | Barium sulfate | | | | | | | | 9.5 | | | | | | |
| | | Silica | | | | | | | | | 9.5 | | | | | |
| | Polymer | PDX-7775 | 8.0 | 8.0 | 8.0 | 8.0 | 8.0 | 8.0 | 8.0 | 8.0 | 8.0 | 8.0 | 8.0 | 8.0 | 8.0 | 9.5 |
| | Water-soluble organic solvent | iBDG (220°C) | 7.0 | 7.0 | 7.0 | 1.0 | 15.0 | | | 7.0 | 7.0 | 20.0 | | | 7.0 | 7.0 |
| | | MG (125°C) | | | | | | 7.0 | | | | | | | | |
| | | BDG (230°C) | | | | | | | 7.0 | | | | | | | |
| | | BTG (271°C) | | | | | | | | | | | 7.0 | | | |
| | | IPA (88°C) | | | | | | | | | | | | 7.0 | | |
| | Surfactant | SF104PG-50 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | TEGO WET 240 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Viscosity controller | UH-420 | 0.7 | 0.4 | | 0.4 | 0.4 | 0.4 | 0.4 | 0.4 | 0.4 | 0.4 | 0.4 | 0.4 | | 0.8 |
| | Antiseptic agent | Ploxel LV (S) | 0.2 | 0.2 | 0.2 | 0.2 | 0.2 | 0.2 | 0.2 | 0.2 | 0.2 | 0.2 | 0.2 | 0.2 | 0.2 | 0.2 |
| | Water | | 81.6 | 73.4 | 63.3 | 79.4 | 65.4 | 73.4 | 73.4 | 73.4 | 73.4 | 60.4 | 73.4 | 73.4 | 53.3 | 81.0 |

Note *1: Numeral values in Table 1 indicate amounts (part(s)) of active ingredients.

*2: Temperature values within parentheses in respective water-soluble organic solvents indicate boiling points thereof.

Meanwhile, the details of the respective notations shown in Table 1 are as follows.

- Silica: "SNOWTEX MP-1040" (tradename; colloidal silica; Na$^+$ stabilized-type alkaline sol; active ingredient content: 40%; average particle size: 120 nm) available from Nissin Chemical Co., Ltd.
- PDX-7775: "JONCRYL PDX-7775" (tradename; acrylic polymer emulsion; solid content: 45%; average particle size: 80 nm) available from BASF Japan, Ltd.
- iBDG: Diethylene glycol monoisobutyl ether; boiling point: 220°C.
- MG: Ethylene glycol monomethyl ether; boiling point: 125°C.
- BDG: Diethylene glycol monobutyl ether; boiling point: 230°C.
- BTG: Triethylene glycol monobutyl ether; boiling point: 271°C.
- IPA: Isopropyl alcohol; boiling point: 88°C.

Incidentally, the aforementioned iBDG, MG, BDG, BTG and IPA all were reagents available from FUJIFILM Wako Pure Chemical Corporation.

- SF104PG-50: "SURFYNOL 104PG-50" (acetylene glycol-based surfactant; a 50% propylene glycol solution having an active ingredient content of 50%) available from Air Products & Chemicals, Inc.
- TEGO WET 240: "TEGO WET 240" (polyether-modified polysiloxane-based surfactant; active ingredient content: 100%) available from Evonik Japan Co., Ltd.
- UH-420: "ADEKANOL UH-420" (tradename; viscosity controller; nonionic polymer surfactant; aqueous solution having an active ingredient content of 30%) available from ADEKA Corporation.
- Ploxel LV(S): Isothiazolin-based antiseptic agent (active ingredient content: 20%) available from LONZA Japan K.K.

Incidentally, the amounts of the respective components compounded as shown in Table 1 indicate amounts of active ingredients thereof, and a total amount of the components compounded is 100 parts.

Examples 1 to 9 and Comparative Examples 1 to 5 (Preparation of Aqueous Gravure Inks)

The aqueous color ink A1 was used in combination with any of the aqueous medium B1 to B9 and B11 to B15 at such a compounding ratio as shown in Table 2 to form ink sets, and the aqueous color ink and the aqueous medium in the respective ink sets were mixed with each other while stirring, thereby preparing aqueous gravure inks diluted.

Using the thus obtained aqueous gravure inks, the following printing tests were conducted to evaluate transfer properties and anti-blocking properties of the respective inks. The results are shown in Table 2.

<Evaluation of Transfer Properties of Ink>

Using the respective aqueous gravure inks obtained above, gravure printing was conducted on a corona discharge-treated surface of an OPP film "FOR-AQ #20" (laminate grade) available from Futamura Chemical Co., Ltd.

In the gravure printing, a solid image having a dot area ratio of 100% was printed by an electronic engraved plate (number of lines: 175 lines/inch; plate cell depth: 31 μm) attached to a bench-top gravure printing tester "K PRINTING PROOFER" available from MATSUO SANGYO Co., Ltd., thereby obtaining a printed material.

The thus obtained solid image printed material was cut into a size of 100 mm x 100 mm to measure an initial mass of the thus cut printed material specimen, and then the printed material specimen was wiped with an acetone-impregnated "BEMCOT" to remove the ink applied therefrom. Thereafter, the printed material specimen was subjected to hot air drying at 40°C for 12 hours to measure a mass thereof. The difference between the initial mass of the printed material specimen and the mass thereof after removing the ink therefrom and then drying was defined as an amount of the ink transferred.

The transfer rate (%) of the ink was calculated from a volume of respective cells (recessed portions) on a surface of the gravure roll printing plate, the amount of the ink transferred, a solid content of the ink and a density of the ink according to the following formula. The transfer properties of the ink was evaluated according to the following evaluation ratings.

$$\text{Transfer Rate (\%) of Ink} =$$

$$[(\text{Amount of Ink Transferred/Solid Content of Ink/Density of}$$

$$\text{Ink})/(\text{Volume of respective Cells on Surface of Gravure Printing Plate})] \times 100$$

(Evaluation Ratings)

A: Transfer rate of the ink was not less than 61% and not more than 70%;
B: Transfer rate of the ink was not less than 56% and less than 61%;
C: Transfer rate of the ink was not less than 51% and less than 56%; and
D: Transfer rate of the ink was not less than 40% and less than 51%.

When the evaluation rating was A, B or C, the ink could be used in the practical applications without problems.
Incidentally, the solid content of the ink was measured by the following method.

(Measurement of Solid Content of Ink)

Sodium sulfate dried to constant weight in a desiccator was weighed in an amount of 10.0 g and charged into a 30 mL polypropylene container ($\phi$: 40 mm; height: 30 mm), and about 1.0 g of a sample to be measured was added to the container. The contents of the container were mixed and then accurately weighed. The resulting mixture was maintained in the container at 105°C for 2 hours to remove volatile components therefrom, and further allowed to stand in a desiccator for 15 minutes to measure a mass thereof. The mass of the sample after removing the volatile components therefrom was regarded as a mass of solids in the sample. The solid content of the sample was calculated by dividing the mass of the solids by the mass of the sample initially added.

<Evaluation of Anti-Blocking Properties>

The aforementioned OPP film was overlapped on the printed material obtained above in the aforementioned item "Evaluation of Transfer Properties of Ink", and a load of 1.5 kg/cm$^2$ was applied to the thus overlapped materials from above, followed by allowing the overlapped materials to stand in the thus loaded state in a high-temperature thermo-hygrostat "HIFLEX KEYLESS TH412E" available from Etac Engineering Co., Ltd., adjusted to a temperature of 35°C and a humidity of 50% for a time period of each of 6 hours, 12 hours and 24 hours. Then, the overlapped OPP film was released from the printed material to examine whether any peel-off of the ink from the printed material occurred or not, and thereby evaluate anti-blocking properties of the printed material according to the following evaluation ratings.

(Evaluation Ratings)

A: Even after being allowed to stand for 24 hours, no peel-off of the ink occurred;
B: Although peel-off of the ink occurred after being allowed to stand for 24 hours, no peel-off of the ink occurred after being allowed to stand for 12 hours;
C: Although peel-off of the ink occurred after being allowed to stand for 12 hours, no peel-off of the ink occurred after being allowed to stand for 6 hours; and
D: Peel-off of the ink occurred after being allowed to stand for 6 hours.

When the evaluation rating was A, B or C, the printed material had no problem concerning anti-blocking properties upon practical use.

TABLE 2

| | | | Examples | | | | | | | | | Comparative Examples | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Aqueous gravure ink set | | Aqueous color ink A1 (part(s)) | 100 | 100 | 100 | 100 | 100 | 100 | 100 | 100 | 100 | 100 | 100 | 100 | 100 | 100 |
| | Kind and amount of medium (part(s)) | Aqueous medium B1 | 20 | | | | | | | | | | | | | |
| | | Aqueous medium B2 | | 20 | | | | | | | | | | | | |
| | | Aqueous medium B3 | | | 20 | | | | | | | | | | | |
| | | Aqueous medium B4 | | | | 20 | | | | | | | | | | |
| | | Aqueous medium B5 | | | | | 20 | | | | | | | | | |
| | | Aqueous medium B6 | | | | | | 20 | | | | | | | | |
| | | Aqueous medium B7 | | | | | | | 20 | | | | | | | |
| | | Aqueous medium B8 | | | | | | | | 20 | | | | | | |
| | | Aqueous medium B9 | | | | | | | | | 20 | | | | | |
| | | Aqueous medium B11 | | | | | | | | | | 20 | | | | |
| | | Aqueous medium B12 | | | | | | | | | | | 20 | | | |
| | | Aqueous medium B13 | | | | | | | | | | | | 20 | | |
| | | Aqueous medium B14 | | | | | | | | | | | | | 20 | |
| | | Aqueous medium B15 | | | | | | | | | | | | | | 20 |
| | Mass ratio [extender pigment/color pigment] | | 0.02 | 0.20 | 0.42 | 0.20 | 0.20 | 0.20 | 0.20 | 0.20 | 0.20 | 0.20 | 0.20 | 0.20 | 0.63 | 0.0 |
| Evaluation | Transfer properties of ink | | A | B | C | C | A | C | A | B | B | A | B | D | D | B |
| | Anti-blocking properties | | C | B | A | A | C | B | C | B | B | D | D | B | A | D |

EP 4 011 986 A1

As apparently recognized from the results shown in Table 2, it was confirmed that the aqueous gravure inks obtained from the ink sets of Examples 1 to 9 which were formed by using the aqueous color ink A1 in combination with the respective aqueous medium B1 to B9 were excellent in transfer properties and were therefore capable of not only providing a high-quality printed material but also exhibiting excellent anti-blocking properties thereof, and as a result, it was possible to obtain a good printed material even when subjecting the printed material to take-up works or stacking works.

On the other hand, it was confirmed that the aqueous gravure inks obtained from the ink sets of Comparative Examples 1 to 5 were deteriorated in transfer properties and anti-blocking properties, as compared to the aqueous gravure inks obtained in Examples 1 to 9, and therefore failed to provide a high-quality printed material.

Industrial Applicability

The aqueous gravure ink set of the present invention and the gravure ink of the present invention have a less burden on the environments, and are excellent not only in transfer properties of ink to a printing substrate such as a resin film, etc., but also in anti-blocking properties of a printed material obtained after gravure printing upon storage of the printed material, to thereby enable production of a high-definition printed material.

**Claims**

1. An aqueous gravure ink set comprising an aqueous color ink and an aqueous medium, in which:

   the aqueous color ink comprises a color pigment, a polymer A, a water-soluble organic solvent A, a surfactant and water, and the aqueous medium comprises an extender pigment, a polymer B, a water-soluble organic solvent B having a boiling point of not lower than 100°C and not higher than 260°C, a surfactant and water;
   a content of the extender pigment in the aqueous medium is not more than 25% by mass; and
   a content of the water-soluble organic solvent B in the aqueous medium is not more than 18% by mass.

2. The aqueous gravure ink set according to claim 1, wherein a boiling point of the water-soluble organic solvent A in the aqueous color ink is not lower than 100°C and not higher than 260°C.

3. The aqueous gravure ink set according to claim 1 or 2, wherein a content of the water-soluble organic solvent A in the aqueous color ink is not less than 1% by mass and not more than 25% by mass.

4. The aqueous gravure ink set according to any one of claims 1 to 3, wherein a content of the polymer A in the aqueous color ink is not less than 2% by mass and not more than 20% by mass.

5. The aqueous gravure ink set according to any one of claims 1 to 4, wherein the extender pigment in the aqueous medium is at least one material selected from the group consisting of calcium carbonate, barium sulfate and silica.

6. The aqueous gravure ink set according to any one of claims 1 to 5, wherein a mass ratio of the content of the extender pigment in the aqueous medium to a content of the color pigment in the aqueous color ink [extender pigment/color pigment] is not less than 0.01 and not more than 3.

7. The aqueous gravure ink set according to any one of claims 1 to 6, wherein the surfactants in the aqueous color ink and the aqueous medium are respectively at least one surfactant selected from the group consisting of an acetylene glycol-based surfactant and a silicone-based surfactant.

8. The aqueous gravure ink set according to any one of claims 1 to 7, wherein a difference between a Zahn cup viscosity of the aqueous medium as measured at 20°C and a Zahn cup viscosity of the aqueous color ink as measured at 20°C is not more than 2 seconds.

9. A use of the aqueous gravure ink set according to any one of claims 1 to 8 for gravure printing.

10. An aqueous gravure ink comprising an aqueous color ink and an aqueous medium which are compounded with each other, in which:

    the aqueous color ink comprises a color pigment, a polymer A, a water-soluble organic solvent A, a surfactant and water, and the aqueous medium comprises an extender pigment, a polymer B, a water-soluble organic solvent B having a boiling point of not lower than 100°C and not higher than 260°C, a surfactant and water;

a content of the extender pigment in the aqueous medium is not more than 25% by mass; and

a content of the water-soluble organic solvent B in the aqueous medium is not more than 18% by mass.

11. A use of the aqueous gravure ink according to claim 10 for gravure printing.

12. A process for producing an aqueous gravure ink comprising the step of compounding an aqueous color ink and an aqueous medium with each other, in which:

the aqueous color ink comprises a color pigment, a polymer A, a water-soluble organic solvent A, a surfactant and water, and the aqueous medium comprises an extender pigment, a polymer B, a water-soluble organic solvent B having a boiling point of not lower than 100°C and not higher than 260°C, a surfactant and water;

a content of the extender pigment in the aqueous medium is not more than 25% by mass;

a content of the water-soluble organic solvent B in the aqueous medium is not more than 18% by mass; and

the aqueous medium is compounded in an amount of not less than 5 parts by mass and not more than 400 parts by mass on the basis of 100 parts by mass of the aqueous color ink.

## INTERNATIONAL SEARCH REPORT

| International application No. |
| --- |
| PCT/JP2020/028790 |

**A. CLASSIFICATION OF SUBJECT MATTER**
C09D 11/023(2014.01)i; C09D 11/033(2014.01)i; C09D 11/037(2014.01)i
FI: C09D11/033; C09D11/023; C09D11/037

According to International Patent Classification (IPC) or to both national classification and IPC

**B. FIELDS SEARCHED**

Minimum documentation searched (classification system followed by classification symbols)
C09D11/023; C09D11/033; C09D11/037

Documentation searched other than minimum documentation to the extent that such documents are included in the fields searched
Published examined utility model applications of Japan        1922–1996
Published unexamined utility model applications of Japan      1971–2020
Registered utility model specifications of Japan              1996–2020
Published registered utility model applications of Japan      1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2011-046874 A (DNP FINE CHEMICALS CO., LTD.) 10.03.2011 (2011-03-10) claims, paragraphs [0016]-[0020], [0024], table 1, etc. | 1–12 |
| X | WO 2016/039128 A1 (DIC CORP.) 17.03.2016 (2016-03-17) claims, paragraphs [0002], [0122]-[0127], [0132]-[0208], etc. | 1–12 |
| A | JP 2016-044282 A (TOYO INK SC HOLDINGS CO., LTD.) 04.04.2016 (2016-04-04) claims, examples, etc. | 1–12 |
| A | WO 2018/088500 A1 (KAO CORP.) 17.05.2018 (2018-05-17) claims, examples, etc. | 1–12 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 September 2020 (28.09.2020) | 13 October 2020 (13.10.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2020/028790

| Patent Documents referred in the Report | Publication Date | Patent Family | Publication Date |
|---|---|---|---|
| JP 2011-046874 A | 10 Mar. 2011 | (Family: none) | |
| WO 2016/039128 A1 | 17 Mar. 2016 | US 2017/0253754 A1 claims, paragraphs [0003], [0155]-[0163], [0168]-[0227], etc. | |
| JP 2016-044282 A | 04 Apr. 2016 | (Family: none) | |
| WO 2018/088560 A1 | 17 May 2018 | US 2019/0264043 A1 claims, examples EP 3540016 A1 CN 109996848 A KR 10-2019-0084965 A | |

Form PCT/ISA/210 (patent family annex) (January 2015)

**EP 4 011 986 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003048280 A

- JP 2018083938 A